# EUROPÄISCHE PATENTSCHRIFT

(11) **EP 1 431 608 B1**
(45) Veröffentlichungstag und Bekanntmachung des Hinweises auf die Patenterteilung: **03.01.2007**
(21) Anmeldenummer: 03026712.4
(22) Anmeldetag: 21.11.2003
(51) Int. Cl.: F16F 9/50, F16F 9/32

(54) **Schwingungsdämpfer mit amplitudenabhängiger Dämpfkraft**
Vibration damper with a damping force proportional to the amplitude
Amortisseur de vibrations avec une force d'amortissement proportionnelle à l'amplitude

(30) Priorität: 17.12.2002 DE 10258815
(43) Veröffentlichungstag der Anmeldung: 23.06.2004
(73) Patentinhaber: ZF Sachs AG, 97424 Schweinfurt (DE)
(72) Erfinder: Gundermann, Frank, 97453 Schonungen-Marktsteinach (DE); Kühnel, Joachim, 97456 Dittelbrunn (DE); Böhm, Christian, 97517 Rannungen (DE); Gilsdorf, Heinz-Joachim, 97499 Donnersdorf (DE)

(56) Entgegenhaltungen:
- DE-A- 10 047 878
- DE-B- 1 264 165
- DE-C- 911 101
- DE-C- 4 002 882

## Beschreibung

Die Erfindung betrifft einen Schwingungsdämpfer mit amplitudenabhängiger Dämpfkraft gemäß dem Oberbegriff von Patentanspruch 1.

Bei der Auslegung eines Schwingungsdämpfers besteht stets ein Kompromiss zwischen einer weichen, komfortbetonten Dämpfkraftkennlinie und einer strafferen, fahrsicherheitsbetonten Dämpfkraftkennlinie. Verstellbare Schwingungsdämpfer, ob stufig geschaltet oder stufenlos, erweitern die Möglichkeiten, sind jedoch deutlich teurer und damit Fahrzeugen der gehobenen Ansprüche vorbehalten.

In der DE 40 02 882 C1 ist ein hydraulischer Schwingungsdämpfer bekannt, dessen Kolbenstange mit einem Gehäuse fest verbunden ist, in dem eine Membran zwei Kammern des Gehäuses trennt. Jede der beiden Kammern ist mit einem Arbeitsraum des Zylinders verbunden. Bei einer kurzen Kolbenstangenbewegung wird das in dem komprimierten Arbeitsraum verdrängte Dämpfmedium in die angeschlossene Kammer des Gehäuses verdrängt, dessen Membran eine geringfügige Vergrößerung der Kammer ermöglicht. Die Vergrößerung der Kammer steht in einer Amplitudenabhängigkeit der Kolbenstangenbewegung. Wird ein definierter Hub der Kolbenstange überschritten, dann muss das Dämpfmedium über ein der Kammer parallel geschaltetes Ventil in den druckentlasteten Arbeitsraum des Zylinders verdrängt werden.

Durch die Verwendung des Gehäuses mit der Membran können insbesondere hochfrequente Schwingungen mit kleiner Amplitude wirksam vom Fahrzeugaufbau isoliert und damit auch bei einer strafferen Fahrwerkabstimmung ein guter Komfort erreicht werden.

Ergänzend wird auf die DE 100 47 878 A1 verwiesen, in der alternativ zur elastisch verformbaren Membran ein starrer Ventilkörper innerhalb des Gehäuses eingesetzt wird.

Aus beiden Quellen entnimmt der Fachmann ein vergleichsweise massives Gehäuse, das mit der Kolbenstange fest verschraubt ist. Bei der Variante nach Fig. 3 der DE 100 47 878 A1 wird zwar darauf hingewiesen, dass das Gehäuse mit bekannten Befestigungstechniken zusammen mit dem Kolben auch mit der Kolbenstange anschließbar ist, jedoch übernimmt dann das Gehäuse eine tragende Funktion und muss entsprechend stabil ausgeführt sein.

Die gattungsbildende DE 12 64 165 B beschreibt einen Schwingungsdämpfer, umfassend eine Kolbenstange, die in einem mit Dämpfmedium gefüllten Zylinder axial beweglich geführt ist und einen Kolben trägt, der den Zylinder in zwei Arbeitsräume unterteilt, wobei mindestens einer der beiden Arbeitsräume eine Strömungsverbindung zu einem Gehäuse aufweist, in dem ein Trennelement mindestens eine Kammer von einem der beiden Arbeitsräume trennt, wobei das Volumen der mindestens einen Kammer des Gehäuses in seiner Größe in definierten Grenzen veränderbar ist, indem das Trennelementeine Relativbewegung zum Gehäuse ausführt und ortsfest zur Kolbenstange angeordnet und das Gehäuse relativ zur Kolbenstange beweglich ist, wobei das Trennelement von einem Flansch gebildet wird, der an der Kolbenstange befestigt ist und das Gehäuse mit mindestens einem Rückstellfeder element für jede Bewegungsrichtung der Kolbenstange versehen ist, die mit einer amplitudenabhängigen Dämpfkrafteinstellung ausgerüstet sein soll.

Aufgabe der vorliegenden Erfindung ist es einen Schwingungsdämpfer mit einer amplitudenabhängigen Dämpfkraftkennlinie im Hinblick auf eine einfache Ausgestaltung des Gehäuses für die begrenzte Aufnahme des Dämpfmediums weiterzuentwickeln.

Erfindungsgemäß wird die Aufgabe durch die Merkmale des Patentanspruchs 1 gelöst.

Ein wesentlicher Vorteil besteht darin, dass eine seriennahe Kolbenstange verwendet werden kann und das Trennelement als massiver Körper ausführbar ist, der im Hinblick auf die Dauerfestigkeit als unkritisch einzustufen ist.

Der Begriff "befestigt" umfasst auch die Möglichkeit, dass der Flansch einteilig von der Kolbenstange gebildet werden kann.

Als Rückstellfederelement kann eine Schraubenfeder, eine Tellerfeder oder auch ein Elastomerkörper eingesetzt werden. Die Auswahl des Typs bestimmt sich nach dem Bauraum und der angestrebten Federkraftkennlinie.

Das Gehäuse lässt sich vorteilhaft aus einem Blech umformen.

So bildet ein zum Trennelement überstehender Rand des Hülsenteils vom Gehäuse zumindest partiell eine axiale Stützfläche zur Wegbegrenzung des Gehäuses. Durch weiteres Umformen des Randes kann die Stützfläche erreicht werden.

Im Hinblick auf eine in engen Toleranzen funktionierende amplitudenabhängige Dämpfkraft ist zwischen dem Trennelement und dem Gehäuse ein Dichtring zur Abdichtung der Kammer angeordnet.

Um den vorhandenen Bauraum optimal auszunutzen und die Anzahl der benötigten Teil gering zu halten wird das Trennelement von einem Schraubelement gebildet, dass ein Bauteil des an der Kolbenstange angeordnete Kolben hält, wie z. B. den Kolbenkörper oder die Vorspannfeder für eine Ventilscheibe des Kolbens.

Dazu kann vorgesehen sein, dass das Schraubelement eine gestufte Außenkontur aufweist, wobei ein erster Absatz die Trennfunktion innerhalb des Gehäuses übernimmt und ein zweiter Absatz mindestens eine Schlüsselfläche aufweist. Dadurch wird die Montage des Trennelementes zusammen mit dem Gehäuse an die Kolbenstange erleichtert.

Die Strömungsverbindung von dem Arbeitsraum zur Kammer innerhalb des Gehäuses sollte tendenziell einen größeren Querschnitt tendenziell unabhängiger von Temperatureinflüssen ist. Anderseits wird man den Querschnitt nicht zu groß wählen, um die Belastbarkeitsgrenze der Kolbenstange nicht zu stark zu vermindern. Um eine gezielte gedrosselte Strömung zu erreichen, ist innerhalb der Strömungsverbindung zur Kammer des Gehäuses eine Blende vorgesehen, deren Durchtrittsquerschnitt kleiner ist als der Querschnitt der Strömungsverbindung.

Vorteilhafterweise wird die Blende von dem Trennelement gebildet.

Zur gezielteren Einstellung der Drosselwirkung innerhalb der Strömungsverbindung ist die Blende innerhalb einer Scheibe ausgeführt, die wiederum von dem Trennelement gehalten wird. Je nach Bedarf kann eine angepasste Scheibe verwendet werden.

Im Hinblick auf die Druckbelastung innerhalb der Kammer ist der Flansch Bestandteil eines Hülsenträgers. Für eine Gewindeverbindung zwischen dem Flansch und der Kolbenstange steht damit bei Bedarf eine größere Gewindelänge zu Verfügung.

Zur Vermeidung von Leckagen, die wiederum die Dämpfkraftkennlinie des Schwingungsdämpfers negativ beeinflussen würden, ist das Gehäuse zu der Baugruppe Kolbenstange abgedichtet.

So kann auch vorgesehen sein, dass der Hülsenträger bezogen auf den Kolben in Ausfahrrichtung der Kolbenstange angeordnet ist. Auch bei dieser Anordnung des Gehäuses bleibt eine durchgehende, bei Bedarf auch einteilige Kolbenstange erhalten.

Der Hülsenträger kann mindestens einen Strömungsanschluss von der Strömungsverbindung zu der mindestens einen Kammer aufweisen.

Um den Hülsenträger in Umfangsrichtung beliebig montierbar zu halten, ist zwischen einem Führungszapfen der Kolbenstange für den Hülsenträger und einer Innenwandung des Hülsenträgers eine Sammelnut angeordnet, die die Strömungsverbindung mit dem Strömungsanschluss des Hülsenträgers verbindet.

Das Rückstellfederelement lässt sich auf eine gewünschte Dämpfkraftkennlinie leichter abstimmen, wenn die Kolbenstange eine Anschlagfläche zur Begrenzung der Axialbewegung des Gehäuses aufweist. In diesem Fall muss das Rückstellfederelement nicht auf Block gehen, um eine Endstellung des Gehäuseverschiebungsweges zu bestimmen.

Anhand der folgenden Figurenbeschreibung soll die Erfindung näher erläutert werden.
- Fig. 1: Schwingungsdämpfer mit axial beweglichem Gehäuse unterhalb des Kolbens
- Fig. 2: Axial bewegliches Gehäuse oberhalb des Kolbens

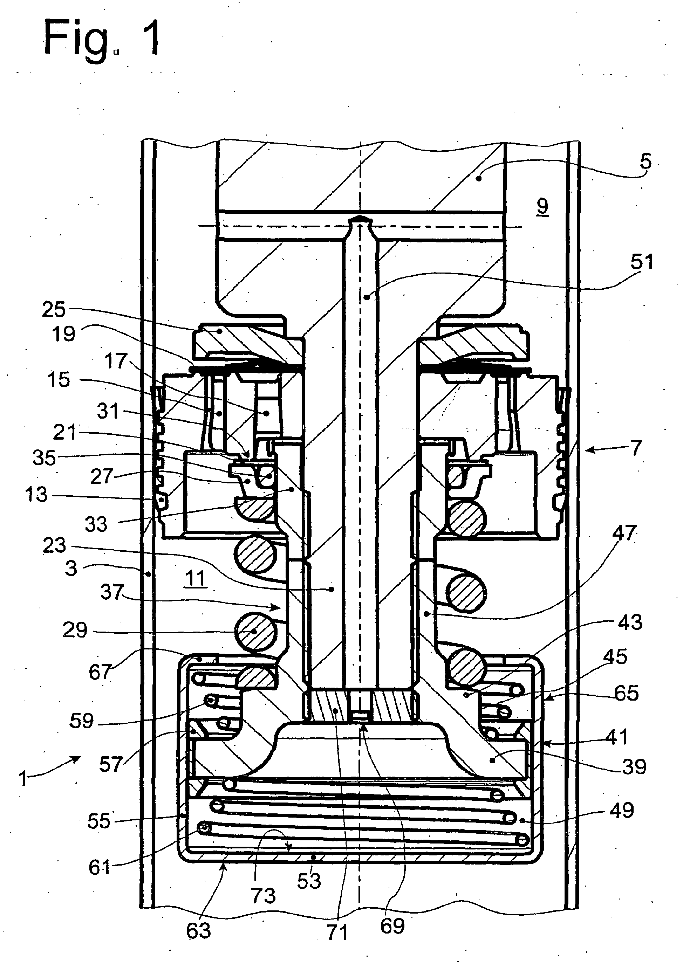

Die Fig. 1 zeigt einen Ausschnitt aus einem Schwingungsdämpfer 1 mit einem dämpfmediumgefüllten Zylinder 3, in dem eine Kolbenstange 5 zusammen mit einem Kolben 7 axial beweglich angeordnet ist. Der Kolben trennt den Zylinder in einen ersten oberen Arbeitsraum 9 und einen zweiten unteren Arbeitsraum 11 bezogen auf den Kolben, wobei der Kolben einen Kolbenring 13 trägt. Innerhalb des Kolbens sind Durchlasskanäle 15; 17 angeordnet, die endseitig von mindestens einer Ventilscheibe 19;21 abgedeckt werden, so dass ein Durchlasskanal, bzw. eine Gruppe von Durchlasskanälen nur in eine Richtung durchströmt werden kann. Der Kolben 7 ist auf einem Kolbenstangenzapfen 23 ortsfest angeordnet. Auf der Kolbenoberseite ist am Innendurchmesser die elastische Ventilscheibe 19 verspannt, deren maximaler Abhub von einer Stützscheibe 25 begrenzt wird. Auf einem inneren Teilkreis ist mindestens ein Durchlasskanal 17 für eine Kolbenstangenbewegung in Richtung des oberen Arbeitsraums angeordnet, wobei die dünne Ventilscheibe 21 zusammen mit einem massiven Ventilring 27 gegen die Kraft einer Schraubendruckfeder 29 von einer Ventilsitzfläche 31 abheben kann. Der Ventilring 27 wird von einer Befestigungsmutter 33 des Kolbens zentriert, wobei ein zwischen der Ventilscheibe und dem Ventilring angeordneter Dichtring 35 eine Leckage zur Befestigungsmutter verhindert.

Die Schraubenfeder 29 wird von einem Schraubelement 37 gehalten, das eine gestufte Außenkontur aufweist. Ein erster Absatz in der Form eines Flansches bildet ein Trennelement 39 innerhalb eines Gehäuses 41, dass zur Kolbenstange axial beweglich gelagert ist. Ein zweiter Absatz des Flansches 43 verfügt über mindestens eine Schlüsselfläche 45, um die Vorspannung der Schraubenfeder einstellen zu können. Der Flansch des Trennelements verfügt über einen Hülsenträger 47, der mit einem Innengewinde ausgeführt ist und über ein Außengewinde mit der Kolbenstange ortsfest verbunden ist. Das Gehäuse bildet mit dem Trennelement eine Kammer 49, die über eine Strömungsverbindung 51, in diesem Fall innerhalb der Kolbenstange, mit dem oberen Arbeitsraum 9 verbunden ist. Folglich ist auch die Kammer 49 permanent mit Dämpfmedium gefüllt.

Das Gehäuse 41 ist topfförmig mit einem Boden 53 und einem Hülsenteil 55 ausgeführt. Die besagte Kammer des Gehäuses bilden der Boden, das Hülsenteil und das Trennelement, wobei das Volumen der Kammer unabhängig von der Bewegungsrichtung der Kolbenstange verändert wird und zwischen dem Trennelement und dem Gehäuse ein Dichtring 57 zur Abdichtung der Kammer angeordnet ist. Für jede Bewegungsrichtung der Kolbenstange, die auch mit einer amplitudenabhängigen Dämpfkrafteinstellung ausgerüstet ist, ist ein Rückstellfederelement 59; 61 vorgesehen. In diesem Fall ist ein erstes Rückstellfederelement 61 zwischen dem Boden 53 des Gehäuses 41 und dem Trennelement 39 verspannt. Damit wird eine Rückstellbewegung erreicht, wenn eine Druckbelastung auf die äußere Bodenfläche 63 des Gehäuses 41 einwirkt.

Zum Trennelement 39 ist ein überstehender Rand 65 des Hülsenteils des Gehäuses zumindest partiell mit einer axialen Stützfläche 67 zur Wegbegrenzung des Gehäuses ausgeführt, wenn sich das Gehäuse bei einer Kolbenstangenbewegung von dem Kolben entfernt. Zwischen der mindestens einen axialen Stützfläche und der Oberseite des Trennelements ist das zweite Rückstellfederelement 59 verspannt.

Bei einer Kolbenstangenbewegung in Richtung des oberen Arbeitsraums 9 dringt Dämpfmedium durch eine nicht dargestellte Aussparung der oberen Ventilscheibe 19 in den mindestens einen inneren Durchlasskanal 17 und trifft auf die dünne Ventilscheibe 21, bei der ggf. ein sehr kleiner permanent geöffneter Querschnitt ausgeführt sein kann. Entweder wird der permanent geöffnete Querschnitt von einer Kerbe im Kolbenkörper oder einer Aussparung in der Ventilscheibe gebildet. Hydraulisch parallel geschaltet nimmt die Strömungsverbindung 51 ebenfalls verdrängtes Dämpfmedium auf und führt es in Richtung der Kammer 49 innerhalb des Gehäuses 41 ab. Dabei kann innerhalb der Strömungsverbindung eine Blende 69 verwendet werden, deren Durchtrittsquerschnitt kleiner ist als der Querschnitt der Strömungsverbindung, so dass ein Drosseleffekt von der Blende definiert wird. In dieser Ausführungsform wird die Blende nicht direkt vom Trennelement, sondern von einer Scheibe 71 gebildet, die wiederum vom Trennelement gehalten wird.

Das in die Kammer 49 verdrängte Dämpfmedium übt eine Druckkraft auf eine innere Bodenfläche 73 des Gehäuses aus, die gegen die Kraft des zweiten, oberhalb des Trennelements 39 angeordneten Rückstellfederelement 59 gerichtet ist. Sobald ein maximaler Verschiebeweg des Gehäuses relativ zum Trennelement erreicht ist und die Kolbenstangenbewegung in dieselbe Richtung weitergeführt wird, steigt der Druck auf die dünne Ventilscheibe 21 und den Ventilring 27, der dann bei weiterem Druckanstieg vom Ventilsitz 31 abhebt. Aufgrund der hydraulisch parallelen Anordnung des mindestens einen Durchlasskanals 17 und der Strömungsverbindung 51 mit der Kammer 49 werden kurze Kolbenstangebewegung von dem axial verschiebbaren Gehäuses ausgefiltert, wobei eine Dämpfkraft innerhalb der Blende 69 oder dem besagten Voröffnungsquerschnitt erreicht wird und ein weiches Ansprechen der Öffnungsbewegung des Ventilrings einsetzt.

Nach Abschluss der momentanen Kolbenstangenbewegung bewegt das obere, im Vergleich zum unteren Rückstellfederelement 61 stärker vorgespannte untere Rückstellfederelement 59 das Gehäuse 41, bezogen auf das Trennelement wieder in eine Normallage, die von den Federkräften der beiden gegensinnig wirksamen Rückstellfederelementen 59; 61 bestimmt wird.

Bei einer Kolbenstangenbewegung aus der Ruhelage in Richtung des unteren Arbeitsraums 11 strömt Dämpfmedium in den mindestens einen äußeren Durchlasskanal 15 und trifft auf die obere Ventilscheibe 19, wobei auch zwischen der oberen Ventilscheibe und dem Kolben ein Voröffnungsquerschnitt ausgeführt sein kann. Gleichzeitig wirkt eine Druckkraft auf die äußere Bodenfläche 63 des Gehäuses 41 gegen die Kraft des unteren Rückstellfederelements 61. Die maximale resultierende Druckfläche am Boden wird vom Innendurchmesser der Kammer 49 bestimmt. Sobald die Druckkraft das Gehäuse relativ zum Trennelement 39 verschiebt, verkleinert sich das Volumen der Kammer 49, wobei Dämpfmedium durch die Blende 69 und weiter durch die Strömungsverbindung 51 in den oberen Arbeitsraum 9 verdrängt wird. Obwohl nur eine Kammer 49 vorhanden ist, besteht die amplitudenabhängige Dämpfkraft für beide Bewegungsrichtungen der Kolbenstange.

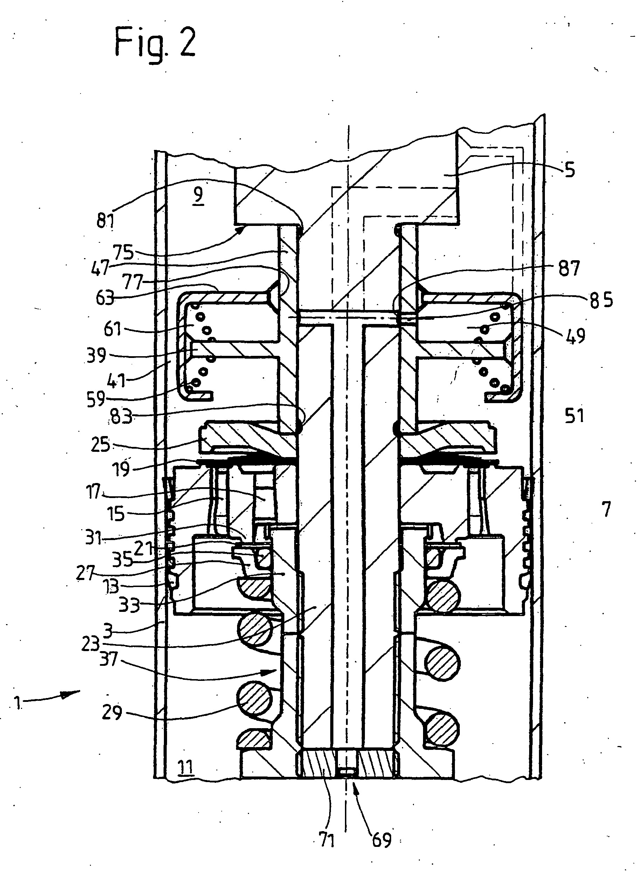

Mit der Fig. 2 soll verdeutlicht werden, dass das axial bewegliche Gehäuse 41 auch oberhalb des Kolbens 7 angeordnet sein kann. Der Aufbau des Kolbens ist völlig identisch mit der Variante nach Fig. 1. Wie man aus der Fig. 2 erkennen kann, ist der Hülsenträger 47 des Trennelements 39 zwischen einem Absatz 75 der Kolbenstange und dem Kolben, in diesem Fall der oberen Stützscheibe 25 verspannt. Generell sind zwei Varianten denkbar, wie man den Boden 53 des Gehäuses 41, der eine Durchlassöffnung 77 aufweist, auslegt. In Volllinie ist eine erste Ausführung dargestellt, bei der der Boden 53 auf dem Kolbenstangenzapfen 23 radial geführt ist. Mit der gestrichelt dargestellten Variante soll aufgezeigt werden, dass auch die Kolbenstange zur Führung des Gehäuses 41 genutzt werden kann. Jeweils ist die Durchlassöffnung 77 im Boden des Gehäuses zur Kolbenstange oder zum Hülsenträger 47, also zur Baugruppe der Kolbenstange, abgedichtet. Zusätzlich kann auch der Hülsenträger 47 über Dichtungen 79; 81 zum Kolbenstangenzapfen 23 abgedichtet sein.

Damit das Dämpfmedium zwischen der Kammer 49 und dem unterenArbeitsraum 11 über die Strömungsverbindung 51 verdrängt werden kann, verfügt der Hülsenträger 47 über mindestens einen Strömungsanschluss 85. Eine Sammelnut 87 zwischen der Innenwandung des Hülsenträgers und dem Kolbenstangenzapfen 23 ermöglicht eine beliebige Ausrichtung des mindestens einen Strömungsanschlusses 85 im Hülsenträger zur Strömungsverbindung 51 innerhalb der Kolbenstange 5.

Die Wirkungsweise ist identisch mit dem zu Fig. 1 Beschriebenen. Bei einer Kolbenstangenbewegung in Richtung des oberen Arbeitsraums 9 baut sich ein Druck auf der äußeren Bodenfläche 63 des Gehäuses auf und das Dämpfmedium zwischen dem Boden 53 und dem Trennelement 39 wird über die Strömungsverbindung 51 in den unteren Arbeitsraum 11 verdrängt. Bei einer Kolbenstangenbewegung in Richtung des unteren Arbeitsraums dringt das Dämpfmedium in die Strömungsverbindung 51 ein und mündet in der größenveränderlichen Kammer 49 im Gehäuse 41.

Bei der Variante, bei der das Gehäuse 41 auf dem Hülsenträger 47 gleitet, kann der Absatz 75 der Kolbenstange zum Kolbenstangenzapfen eine Anschlagfläche zur Begrenzung der Axialbewegung des Gehäuses bilden. Des weiteren bietet diese Lösung im Vergleich zur gestrichelt dargestellten Gehäusevariante eine größere Druckfläche für das Dämpfmedium und ermöglicht einen kleineren Axialverschiebungsweg zur Kompensation eines bestimmten Volumens von verdrängtem Dämpfmedium.

## Patentansprüche

1. Schwingungsdämpfer, umfassend eine Kolbenstange (5), die in einem mit Dämpfmedium gefüllten Zylinder (3) axial beweglich geführt ist und einen Kolben (7) trägt, der den Zylinder (3) in zwei Arbeitsräume (9; 11) unterteilt, wobei mindestens einer der beiden Arbeitsräume (9; 11) eine Strömungsverbindung (51) zu einem Gehäuse (41) aufweist, in dem ein Trennelement (39) mindestens eine Kammer (49) von einem der beiden Arbeitsräume (9; 11) trennt, wobei das Volumen der mindestens einen Kammer (49) des Gehäuses (41) in seiner Größe in definierten Grenzen veränderbar ist, indem das Trennelement (39) eine Relativbewegung zum Gehäuse (41) ausführt und ortsfest zur Kolbenstange (5) angeordnet und das Gehäuse (41) relativ zur Kolbenstange (5) beweglich ist, wobei das Trennelement (39) von einem Flansch gebildet wird, der an der Kolbenstange (5) befestigt ist und das Gehäuse (41) mit mindestens einem Rückstellfederelement (59; 61) für jede Bewegungsrichtung der Kolbenstange (5) versehen ist, die mit einer amplitudenabhängigen Dämpfkrafteinstellung ausgerüstet ist,
**dadurch gekennzeichnet,**
**dass** das Gehäuse (41) in einem der beiden Arbeitsräume (9; 11) angeordnet ist und die Strömungsverbindung (51) die mindestens eine Kammer (49) im Gehäuse (41) mit dem anderen Arbeitsraum (9; 11) verbindet, wobei das Gehäuse topfförmig mit einem Boden (53) und einem Hülsenteil (55) ausgeführt ist, wobei der Boden (53) und das Hülsenteil (55) zusammen mit dem Trennelement (39) die Kammer (49) bilden, deren Volumen unabhängig von der Bewegungsrichtung der Kolbenstange verändert wird.

2. Schwingungsdämpfe nach Anspruch 1,
**dadurch gekennzeichnet,**
**dass** ein zum Trennelement (39) überstehender Rand (65) des Hülsenteils (55) vom Gehäuse (41) zumindest partiell eine axiale Stützfläche (67) zur Wegbegrenzung des Gehäuses bildet.

3. Schwingungsdämpfer nach Anspruch 1,
**dadurch gekennzeichnet,**
**dass** zwischen dem Trennelement (39) und dem Gehäuse (41) ein Dichtring (57) zur Abdichtung der Kammer (49) angeordnet ist.

4. Schwingungsdämpfer nach Anspruch 1,
**dadurch gekennzeichnet,**
**dass** das Trennelement (39) von einem Schraubelement gebildet wird, das ein Bauteil des an der Kolbenstange (5) angeordneten Kolbens (7) hält

5. Schwingungsdämpfer nach Anspruch 4,
**dadurch gekennzeichnet,**
**dass** das Schraubelement eine gestufte Außenkontur aufweist, wobei ein erster Absatz die Trennfunktion innerhalb des Gehäuses (41) übernimmt und ein zweiter Absatz (43) mindestens eine Schlüsselfläche (45) aufweist.

6. Schwingungsdämpfer nach Anspruch 1,
**dadurch gekennzeichnet,**
**dass** innerhalb der Strömungsverbindung (51) zur Kammer (49) des Gehäuses (41) eine Blende (69) vorgesehen ist, deren Durchtrittsquerschnitt kleiner ist als der Querschnitt der Strömungsverbindung.

7. Schwingungsdämpfer nach Anspruch 6,
**dadurch gekennzeichnet,**
**dass** die Blende (69) von dem Trennelement (39) gebildet wird.

8. Schwingungsdämpfer nach Anspruch 6,
**dadurch gekennzeichnet,**
**dass** die Blende (69) innerhalb einer Scheibe (71) ausgeführt ist, die wiederum von dem Trennelement (39) gehalten wird.

9. - Schwingungsdämpfer nach Anspruch 1
**dadurch gekennzeichnet,**
**dass** der Flansch (39) Bestandteil eines Hülsenträgers (47) ist.

10. Schwingungsdämpfer nach Anspruch 1,
**dadurch gekennzeichnet,**
**dass** das Gehäuse (41) zur Baugruppe der Kolbenstange (5; 47) abgedichtet ist.

11. Schwingungsdämpfer nach Anspruch 9,
**dadurch gekennzeichnet,**
**dass** Hülsenträger (47) bezogen auf den Kolben (7) in Ausfahrrichtung der Kolbenstange (5) angeordnet ist.

12. Schwingungsdämpfer nach Anspruch 9,
**dadurch gekennzeichnet,**
**dass** der Hülsenträger (49) mindestens einen Strömungsanschluss (85) von der Strömungsverbindung (51) zu der mindestens einen Kammer (49) aufweist.

13. Schwingungsdämpfer nach Anspruch 12,
**dadurch gekennzeichnet,**
**dass** zwischen einem Kolbenstangenzapfen (23) und einer Innenwandung des Hülsenträgers (47) eine Sammelnut (87) angeordnet ist, die die Strömungsverbindung (51) mit dem Strömungsanschluss (85) des Hülsenträgers (47) verbindet.

14. Schwingungsdämpfer nach Anspruch 1,
**dadurch gekennzeichnet,**
**dass** die Kolbenstange (5) eine Anschlagfläche (75) zur Begrenzung der Axialbewegung des Gehäuses (41) aufweist.

## Claims

1. Vibration damper, comprising a piston rod (5) which is guided in an axially movable manner in a cylinder (3) filled with damping medium and which supports a piston (7) which divides the cylinder (3) into two working spaces (9; 11), wherein at least one of the two working spaces (9; 11) has a flow connection (51) to a housing (41) in which a partition element (39) separates at least one chamber (49) from one of the two working spaces (9; 11), wherein the volume of the at least one chamber (49) of the housing (41) is variable in its size, within defined limits, by dint of the partition element (39) performing a relative motion to the housing (41) and being fixedly disposed relative to the piston rod (5) and the housing (41) being movable relative to the piston rod (5), wherein the partition element (39) is formed by a flange fastened to the piston rod (5), and the housing (41) is provided with at least one restoring spring element (59; 61) for each motional direction of the piston rod (5), which latter is equipped with an amplitude-dependent damping force adjustment, **characterized in that** the housing (41) is disposed in one of the two working spaces (9; 11) and the flow connection (51) connects the at least one chamber (49) in the housing (41) to the other working space (9; 11), the housing being of pot-shaped construction, having a base (53) and a sleeve part (55), and the base (53) and the sleeve part (55) forming, together with the partition element (39), the chamber (49), the volume of which is varied independently of the motional direction of the piston rod.

2. Vibration damper according to Claim 1, **characterized in that** a border (65) of the sleeve part (55) of the housing (41), which border juts out beyond the partition element (39), forms at least partially an axial support face (67) for the travel limitation of the housing.

3. Vibration damper according to Claim 1, **characterized in that** between the partition element (39) and the housing (41) there is disposed a sealing ring (57) for the sealing of the chamber (49).

4. Vibration damper according to Claim 1, **characterized in that** the partition element (39) is formed by a screw element, which holds a structural part of the piston (7) disposed on the piston rod (5).

5. Vibration damper according to Claim 4, **characterized in that** the screw element has a stepped outer contour, a first shoulder assuming the partition function within the housing (41) and a second shoulder (43) having at least one flat (45).

6. Vibration damper according to Claim 1, **characterized in that** within the flow connection (51) to the chamber (49) of the housing (41) an orifice plate (69) is provided, the apertural cross section of which is smaller than the cross section of the flow connection.

7. Vibration damper according to Claim 6, **characterized in that** the orifice plate (69) is formed by the partition element (39).

8. Vibration damper according to Claim 6, **characterized in that** the orifice plate (69) is realized within a disc (71), which, in turn, is held by the partition element (39).

9. Vibration damper according to Claim 1, **characterized in that** the flange (39) is a component part of a sleeve carrier (47).

10. Vibration damper according to Claim 1, **characterized in that** the housing (41) is sealed with respect to the piston rod assembly (5; 47).

11. Vibration damper according to Claim 9, **characterized in that** the sleeve carrier (47) is disposed, relative to the piston (7), in the direction of extension of the piston rod (5).

12. Vibration damper according to Claim 9, **characterized in that** the sleeve carrier (47) has at least one flow port (85) from the flow connection (51) to the at least one chamber (49).

13. Vibration damper according to Claim 12, **characterized in that** between a piston rod journal (23) and an inner wall of the sleeve carrier (47) there is disposed a collecting groove (87), which connects the flow connection (51) to the flow port (85) of the sleeve carrier (47).

14. Vibration damper according to Claim 1, **characterized in that** the piston rod (5) has a stop face (75) for limiting the axial motion of the housing (41).

## Revendications

1. Amortisseur de vibrations, comprenant une tige de piston (5), qui est guidée en mouvement axial dans un cylindre (3) rempli d'un fluide d'amortissement et qui porte un piston (7), qui divise le cylindre (3) en deux chambres de travail (9; 11), dans lequel au moins une des deux chambres de travail (9; 11) présente un passage d'écoulement (51) vers un boîtier (41), dans lequel un élément de séparation (39) sépare au moins une chambre (49) d'une des deux chambres de travail (9; 11), dans lequel le volume de la au moins une chambre (49) du boîtier (41) peut varier en taille dans des limites définies du fait que l'élément de séparation (39) effectue un mouvement relatif par rapport au boîtier (41) et est fixe par rapport à la tige de piston (5) et que le boîtier (41) est mobile par rapport à la tige de piston (5), dans lequel l'élément de séparation (39) est formé par une bride qui est fixée sur la tige de piston (5) et le boîtier (41) est pourvu d'au moins un élément de ressort de rappel (59; 61) pour chaque sens de mouvement de la tige de piston (5), qui est pourvue d'un réglage de la force d'amortissement proportionnel à l'amplitude, **caractérisé en ce que** le boîtier (41) est disposé dans une des deux chambres de travail (9; 11) et le passage d'écoulement (51) relie la au moins une chambre (49) dans le boîtier (41) à l'autre chambre de travail (9; 11), le boîtier étant réalisé en forme de godet avec un fond (53) et une partie de douille (55), le fond (53) et la partie de douille (55) formant, avec l'élément de séparation (39), la chambre (49) dont le volume est modifié indépendamment du sens du mouvement de la tige de piston.

2. Amortisseur de vibrations selon la revendication 1, **caractérisé en ce qu'**un bord (65) de la partie de douille (55) du boîtier (41) saillant vers l'élément de séparation (39) forme au moins partiellement une surface d'appui axiale (67) pour limiter la course du boîtier.

3. Amortisseur de vibrations selon la revendication 1, **caractérisé en ce qu'**un joint torique (57) est disposé entre l'élément de séparation (39) et le boîtier (41) pour isoler la chambre (49).

4. Amortisseur de vibrations selon la revendication 1, **caractérisé en ce que** l'élément de séparation (39) est formé par un élément fileté, qui maintient un composant du piston (7) disposé sur la tige de piston (5).

5. Amortisseur de vibrations selon la revendication 4, **caractérisé en ce que** l'élément fileté présente un contour extérieur étagé, dans lequel un premier épaulement assure la fonction de séparation à l'intérieur du boîtier (41) et un deuxième épaulement (43) présente au moins une face de clé (45).

6. Amortisseur de vibrations selon la revendication 1, **caractérisé en ce qu'**il est prévu à l'intérieur du passage d'écoulement (51) vers la chambre (49) du boîtier (41) un diaphragme (69), dont la section de passage est plus petite que la section du passage d'écoulement.

7. Amortisseur de vibrations selon la revendication 6, **caractérisé en ce que** le diaphragme (69) est formé par l'élément de séparation (39).

8. Amortisseur de vibrations selon la revendication 6, **caractérisé en ce que** le diaphragme (69) est réalisé à l'intérieur d'une rondelle (71), qui est de nouveau maintenue par l'élément de séparation (39).

9. Amortisseur de vibrations selon la revendication 1, **caractérisé en ce que** la bride (39) fait partie d'un support de douille (47).

10. Amortisseur de vibrations selon la revendication 1, **caractérisé en ce que** le boîtier (41) est étanche par rapport au groupe de la tige de piston (5; 47).

11. Amortisseur de vibrations selon la revendication 9, **caractérisé en ce que** le support de douille (47) est disposé dans le sens de la sortie de la tige de piston (5) par rapport au piston (7).

12. Amortisseur de vibrations selon la revendication 9, **caractérisé en ce que** le support de douille (47) comporte au moins un raccord d'écoulement (85) du passage d'écoulement (51) à la au moins une chambre (49).

13. Amortisseur de vibrations selon la revendication 12, **caractérisé en ce que**, entre un tourillon (23) de la tige de piston et une paroi intérieure du support de douille (47), il est prévu une rainure de collecte (87) qui relie le passage d'écoulement (51) au raccord d'écoulement (85) du support de douille (47).

14. Amortisseur de vibrations selon la revendication 1, **caractérisé en ce que** la tige de piston (5) présente une surface de butée (75) pour limiter le mouvement axial du boîtier (41).
